(19) Europäisches Patentamt / European Patent Office / Office européen des brevets

(11) **EP 1 695 465 B1**

(12) **FASCICULE DE BREVET EUROPEEN**

(45) Date de publication et mention de la délivrance du brevet:
**21.02.2007 Bulletin 2007/08**

(21) Numéro de dépôt: **03799641.0**

(22) Date de dépôt: **19.12.2003**

(51) Int Cl.:
**H04B 10/155** $^{(2006.01)}$

(86) Numéro de dépôt international:
**PCT/FR2003/003809**

(87) Numéro de publication internationale:
**WO 2005/069515 (28.07.2005 Gazette 2005/30)**

(54) **CONVERTISSEUR TOUT OPTIQUE**

REIN OPTISCHER WANDLER

ALL-OPTICAL CONVERTER

(84) Etats contractants désignés:
**AT BE BG CH CY CZ DE DK EE ES FI FR GB GR HU IE IT LI LU MC NL PT RO SE SI SK TR**

(43) Date de publication de la demande:
**30.08.2006 Bulletin 2006/35**

(73) Titulaire: **France Telecom S.A.**
**75015 Paris (FR)**

(72) Inventeurs:
• **CUENOT, Benjamin**
  **CORK (IE)**
• **LE ROUZIC, Esther**
  **F-22560 Trebeurden (FR)**
• **BROCHIER, Nicolas**
  **F-22970 Ploumagoar (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
**US-A- 5 466 925         US-A1- 2003 007 216**
**US-A1- 2003 007 231**

• **TERUMI CHIKAMA ET AL: "MODULATION AND DEMODULATION TECHNIQUES IN OPTICAL HETERODYNE PSK TRANSMISSION SYSTEMS" JOURNAL OF LIGHTWAVE TECHNOLOGY, IEEE. NEW YORK, US, vol. 8, no. 3, 1 mars 1990 (1990-03-01), pages 309-322, XP000136397 ISSN: 0733-8724**

**Description**

L'invention concerne un convertisseur tout optique d'un signal optique modulé en intensité en un signal optique modulé au format DPSK. Elle trouve application dans le domaine des transmissions optiques.

On connaît la modulation en intensité par "tout-ou-rien" (On/Off Keying ou OOK). Dans ce cas, une impulsion représente un "1" et une absence d'impulsion représente un "0".

On connaît la modulation par déplacement de phase différentiel (Differential Phase Shift Keying ou DPSK). Dans le format DPSK l'information est transportée dans la différence de phase entre deux impulsions voisines.

La transmission au format DPSK est avantageuse car la sensibilité est meilleure. De plus en optique il est facile d'analyser la différence de phase entre deux signaux.

Il existe actuellement dans le domaine des transmissions optiques des convertisseurs, qui convertissent un signal électrique binaire codé en amplitude en signal optique codé au format DPSK. Ces convertisseurs associent des éléments électroniques et des éléments optiques.

US 2003/0007216 divulgue un tel convertisseur.

La partie électronique du convertisseur comprend une porte logique électronique OU-exclusif (XOR). Le signal électronique, qui représente l'information, arrive modulé en amplitude sur la première entrée de la porte logique. La sortie de la porte logique est connectée sur la deuxième entrée de la porte logique avec un retard d'un temps bit par rapport à la première entrée.

Dans un cas particulier, un signal optique, servant de porteuse est envoyé dans un modulateur opto-électronique, par exemple du type Mach-Zender. Ce modulateur est commandé par le signal électrique issu de la sortie de la porte logique et réalise une modulation de manière à ce qu'un état du signal électrique égal à "1" soit associé à une différence de phase de $\pi$ du signal optique.

Ces convertisseurs, qui allient l'électronique et l'optique sont très coûteux pour les fréquences supérieures à 20GHz et sont inexistants pour les fréquences supérieures à 40GHz.

Le problème est donc de réaliser un convertisseur tout optique d'un signal optique modulé en intensité en un signal optique modulé au format DPSK.

L'invention n'est pas limitée à certaines fréquences et peut s'appliquer à tout le spectre.

Dans la suite on appellera coupleur 3dB des coupleurs 2 vers 2 ou encore 50:50.

Dans la suite on dira qu'une sortie d'un composant n'est pas connectée si le signal qui est délivré sur cette sortie est entièrement absorbé, ne perturbant pas les signaux en amont ou en aval. On dira qu'une entrée d'un composant n'est pas alimentée si l'amplitude du signal qu'elle reçoit est nulle.

Un objet de la présente invention est de proposer un convertisseur qui ne présente pas les inconvénients de l'art antérieur.

A cet effet, est proposé un convertisseur tout optique d'un signal optique modulé en intensité en un signal optique modulé au format DPSK, caractérisé en ce qu'il comprend: une première entrée pour un premier signal optique modulé en intensité; un module d'encodage différentiel adapté à réaliser un encodage différentiel entre le premier signal et un deuxième signal optique synchrone avec le premier signal; un dispositif adapté à moduler la phase d'un signal optique en fonction de l'encodage différentiel réalisé par le module d'encodage différentiel; une sortie du dispositif adapté à moduler délivrant un signal optique modulé au format DPSK.

Avantageusement le module d'encodage différentiel réalise l'encodage différentiel à partir d'une fonction OU-exclusif et d'une boucle de rétroaction.

Avantageusement pour réaliser la fonction OU-exclusif, le module d'encodage différentiel comprend: un premier coupleur optique dont la première entrée est alimentée avec le premier signal, dont la deuxième entrée est alimentée avec le deuxième signal et dont la deuxième sortie n'est pas connectée; un deuxième coupleur optique dont la première entrée est alimentée par la première sortie du premier coupleur, dont la deuxième entrée n'est pas alimentée; un dispositif non linéaire absorbant dont l'entrée est alimentée par la deuxième sortie du deuxième coupleur; et un troisième coupleur optique dont la première entrée est alimentée par la première sortie du deuxième coupleur, dont la deuxième entrée est alimentée par la sortie du dispositif non linéaire absorbant, dont la deuxième sortie n'est pas connectée et dont la première sortie délivre le signal représentatif du résultat de la fonction OU-exclusif.

Avantageusement le module d'encodage différentiel comprend un quatrième coupleur optique dont la première entrée est alimentée par la première sortie du troisième coupleur, dont la deuxième entrée n'est pas alimentée, dont la première sortie alimente le dispositif adapté à moduler et dont la deuxième sortie alimente la boucle de rétroaction.

Avantageusement le deuxième signal optique synchrone est délivré par la boucle de rétroaction.

Avantageusement la boucle de rétroaction comprend un dispositif de déphasage optique, un amplificateur optique.

Avantageusement la boucle de rétroaction comprend aussi un dispositif de retard optique accordable adapté à retarder le deuxième signal par rapport au premier signal avec un nombre entier de temps bits.

Avantageusement le dispositif adapté à moduler comprend un coupleur dont la première entrée est alimentée par le signal encodé par le module d'encodage différentiel, dont la deuxième entrée est alimentée par un signal déphasé de $\dfrac{\pi}{2}$ par rapport au signal encodé, dont la deuxième sortie n'est pas connectée et dont la première sortie délivre un signal optique modulé au format DPSK.

Avantageusement le dispositif adapté à moduler comprend en amont de sa deuxième entrée un dispositif de retard optique accordable adapté à retarder le signal déphasé par rapport au signal encodé avec un nombre entier de temps bits.

Avantageusement la phase du signal optique modulé au format DPSK varie de zéro à $\pi$ selon le résultat de la fonction OU-exclusif.

Avantageusement les coupleurs optiques sont des coupleurs optiques 3dB.

Avantageusement le premier signal a une amplitude de $E_0$ et le deuxième signal a une amplitude de $E_0$ et un déphasage de $-\dfrac{\pi}{2}$ par rapport au premier signal; en ce que le gain l'amplificateur optique a un gain de 12.04dB; en ce que le dispositif non linéaire absorbant a un seuil légèrement supérieur à $\alpha^2.E_0$ avec $\alpha = \dfrac{\sqrt{2}}{2}$ ; en ce que le signal alimentant la deuxième entrée du coupleur du dispositif adapté à moduler a une amplitude de $\dfrac{\alpha^4}{2}.E_0$ et un déphasage de $\dfrac{\pi}{2}$ par rapport au signal alimentant la première entrée du cinquième coupleur du dispositif adapté à moduler.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique qui représente un convertisseur selon l'invention;

La Fig. unique représente un convertisseur 10 tout optique qui réalise la conversion d'un signal optique modulé en intensité en un signal optique modulé au format DPSK.

Le convertisseur 10 comprend une première entrée 152a, sur laquelle est injecté un premier signal optique 12. Le signal optique 12 est représentatif d'une séquence de données, il est modulé en intensité selon un format OOK. Ce signal optique peut avoir été généré à partir d'un signal électrique et d'un modulateur opto-électronique qui transforme le signal électrique modulé en OOK en signal optique modulé en OOK.

Le convertisseur 10 comprend une deuxième entrée 162e, sur laquelle est injectée une porteuse optique 16 (continue ou non), qui est ensuite modulée au format DPSK.

Le convertisseur 10 comprend une première sortie 162c sur laquelle est délivré un signal optique 14 modulé au format DPSK.

Le convertisseur 10 réalise ainsi la conversion tout optique d'un signal optique modulé en intensité en un signal optique modulé au format DPSK.

Le convertisseur 10 comprend un module d'encodage différentiel 100 et un dispositif adapté à moduler 200.

Le dispositif adapté à moduler 200 est muni d'une première entrée 162a qui est reliée à la sortie du module d'encodage différentiel 100 et sur laquelle est reçu le signal encodé par le module d'encodage différentiel 100. Le dispositif adapté à moduler 200 est muni de la deuxième entrée 162e sur laquelle est injectée la porteuse 16. Le dispositif adapté à moduler 200 est aussi muni de la première sortie 162c. La première sortie 162c du convertisseur 10 délivre le signal optique 14 modulé au format DPSK. Le dispositif adapté à moduler 200 module la phase du signal optique 16 en fonction de l'encodage différentiel réalisé par le module d'encodage différentiel 100.

Le dispositif adapté à moduler 200 comprend un coupleur 202 que l'on numérotera cinquième coupleur 202, un dispositif de déphasage 204 et dispositif de retard optique accordable 206.

Le cinquième coupleur 202 comprend la première entrée 162a et une deuxième entrée 162b. Le cinquième coupleur 202 comprend aussi la première sortie 162c et une deuxième sortie 162d non connectée.

Le dispositif de déphasage 204 et le dispositif de retard optique accordable 206 sont montés en série entre la deuxième entrée 162e et la deuxième entrée 162b.

Le dispositif de déphasage 204 qui peut être accordable est mis en place afin d'assurer un certain déphasage entre le signal présent sur la première entrée 162a et le signal présent sur la deuxième entrée 162b.

Le dispositif de retard optique accordable 206 permet la synchronisation des bits des signaux des deux entrées 162a et 162b du cinquième coupleur 202. En particulier on règle le dispositif de retard optique 206 pour avoir un nombre entier de temps bit de retard. Comme nous le verrons par la suite ce dispositif de retard 206 n'est pas toujours nécessaire.

Le module d'encodage différentiel 100 comprend la première entrée 152a et une première sortie 158c qui est connectée à la première entrée 162a du dispositif adapté à moduler 200 et qui délivre le signal encodé.

On va maintenant décrire la structure du module d'encodage différentiel 100.

Le module d'encodage différentiel 100 comprend quatre coupleurs optiques 102, 104, 106 et 108, un dispositif non linéaire absorbant 110 et une boucle de rétroaction 30.

Le premier coupleur 102 comprend la première entrée 152a qui est alimentée avec le premier signal 12 et une deuxième entrée 152b qui est alimentée avec un deuxième signal optique synchrone avec le premier signal 12 et délivré par exemple par la boucle de rétroaction 30. Le premier coupleur 102 comprend aussi une première sortie 152c et une deuxième sortie 152d qui n'est pas connectée.

Le deuxième coupleur optique 104 comprend une première entrée 154a alimentée par la première sortie 152c du premier coupleur 102, une deuxième entrée 154b qui n'est pas alimentée. Le deuxième coupleur optique 104 comprend aussi une première sortie 154c et une deuxième sortie 154d.

Le dispositif non linéaire absorbant 110 permet d'absorber tout champ électromagnétique dont l'amplitude est inférieure ou égale à une valeur de seuil et de transmettre tout champ électromagnétique dont l'amplitude est supérieure à la valeur de seuil. Le dispositif non linéaire absorbant 110 peut être du type absorbant saturable ou une boucle optique non linéaire. Le dispositif non linéaire absorbant 110 comprend une entrée qui est alimentée par la deuxième sortie 154d du deuxième coupleur 104.

Le troisième coupleur optique 106 comprend une première entrée 156a qui est alimentée par la première sortie 154c du deuxième coupleur 104 et une deuxième entrée 156b qui est alimentée par la sortie du dispositif non linéaire absorbant 110. Le troisième coupleur optique 106 comprend aussi une première sortie 156c et une deuxième sortie 156d qui n'est pas connectée.

Le quatrième coupleur optique 108 comprend une première entrée 158a qui est alimentée par la première sortie 156c du troisième coupleur 106 et une deuxième entrée 158b qui n'est pas alimentée. Le quatrième coupleur optique 108 comprend aussi la première sortie 158c qui alimente le dispositif adapté à moduler 200 et une deuxième sortie 158d qui alimente la boucle de rétroaction 30.

La boucle de rétroaction 30 comprend un dispositif de déphasage optique 112, un amplificateur optique 114 et un dispositif de retard optique accordable 116 adapté à retarder le deuxième signal présent à la deuxième entrée 152b du premier coupleur 102 par rapport au premier signal 12 avec un nombre entier de temps bits.

Le module d'encodage différentiel 100 réalise l'encodage différentiel de la séquence de données de manière tout optique à partir du premier signal optique 12 présent à la première entrée 152a et du deuxième signal optique, synchrone avec le premier, présent à la deuxième entrée 152b du premier coupleur 102.

Le module d'encodage différentiel 100 réalise entre autre une fonction OU-exclusif entre les signaux optiques présents aux entrées 152a et 152b, grâce à la combinaison du premier coupleur 102, du deuxième coupleur 104, du troisième coupleur 106 et du dispositif non linéaire absorbant 110. Le signal présent sur la première sortie 156c du troisième coupleur 106 représente la fonction logique OU-exclusif entre les signaux optiques présents aux entrées 152a et 152b.

Chaque élément 102, 104, 106, 108 et 202 est un coupleur optique 3dB. Les signaux optiques sortant de ces coupleurs vérifient alors la relation matricielle suivante:

$$\begin{pmatrix} S_1 \\ S_2 \end{pmatrix} = \begin{pmatrix} \alpha & \alpha.e^{i\frac{\pi}{2}} \\ \alpha.e^{i\frac{\pi}{2}} & \alpha \end{pmatrix} . \begin{pmatrix} E_1 \\ E_2 \end{pmatrix} \qquad (1)$$

dans laquelle $E_1$ et $E_2$ sont les champs électromagnétiques présents sur les premières et les deuxièmes entrées du coupleur, $S_1$ et $S_2$ sont les champs électromagnétiques présents sur les premières et les deuxièmes sorties du coupleur

et où $\alpha = \dfrac{\sqrt{2}}{2}$.

Le signal d'origine 12, présent sur la première entrée 152a est un champ électromagnétique ayant une amplitude égale à $E_0$ ou nulle.

Le signal optique présent sur la deuxième entrée 152b est un champ électromagnétique supposé avoir une amplitude égale à $E_0$ ou nulle et lorsque son amplitude vaut $E_0$, un déphasage de $-\dfrac{\pi}{2}$ par rapport au signal optique présent sur la première entrée 152a.

La valeur de seuil du dispositif non linéaire absorbant 110 sera ici choisie légèrement supérieure à $\alpha^2.E_0$, de

manière à transmettre tout champ électromagnétique dont l'amplitude sera supérieure à $\alpha^2.E_0$. Comme nous le verrons ci-dessous la valeur de seuil est choisie pour permettre la transmission des champs dont l'amplitude vaut $2\alpha^2.E_0$ et absorber les champs dont l'amplitude est nulle ou égale à $\alpha^2.E_0$.

Nous allons maintenant étudier le fonctionnement du module d'encodage différentiel 100.

Le premier coupleur 102 réalise le couplage des entrées 152a et 152b et délivre le signal optique ainsi couplé sur la première sortie 152c. Le signal optique présent sur la première sortie 152c correspond à $S_1$ dans la relation (1).

Le tableau suivant résume les valeurs possibles de l'amplitude et de la phase du signal présent sur la première sortie 152c en fonction des amplitudes des signaux présents sur les entrées 152a et 152b, à savoir le premier signal 12 et le deuxième signal présent à la deuxième entrée 152b du premier coupleur 102 et qui correspondent à $E_1$ et $E_2$ dans la relation (1).

| $|E1|$ | $|E2|$ | $|S_1|$ | $\varphi_{s1}$ | |
|---|---|---|---|---|
| 0 | 0 | 0 | X | |
| $E_0$ | 0 | $\alpha.E_0$ | 0 | (2) |
| 0 | $E_0$ | $\alpha.E_0$ | 0 | |
| $E_0$ | $E_0$ | $2\alpha.E_0$ | 0 | |

La phase du signal sur la première sortie 152c est constante et égale à la phase du signal présent à la première entrée 152a si le signal en sortie est non nul. La phase du signal n'a pas de sens dans le cas où le signal en sortie est nul.

Le signal présent sur la première sortie 152c est injecté sur la première entrée 154a du deuxième coupleur 104. Le signal présent sur la première entrée 154a du deuxième coupleur 104 est alors représenté par $E_1$ dans la relation (1). Les signaux présents sur les sorties 154c et 154d du deuxième coupleur 104 jouent les rôles de $S_1$ et $S_2$ dans la relation (1). Un tableau similaire à (2) peut être écrit pour le deuxième coupleur 104 en fonction des valeurs de l'amplitude du signal présent sur la première entrée 154a. On a alors:

| $|E1|$ | $|E2|$ | $|S_1|$ | $|S_2|$ | $\varphi_{s1}$ | $\varphi_{s2}$ | |
|---|---|---|---|---|---|---|
| 0 | 0 | 0 | 0 | X | X | |
| $\alpha.E_0$ | 0 | $\alpha^2.E_0$ | $\alpha^2.E_0$ | 0 | $\dfrac{\pi}{2}$ | (3) |
| $\alpha.E_0$ | 0 | $\alpha^2.E_0$ | $\alpha^2.E_0$ | 0 | $\dfrac{\pi}{2}$ | |
| $2\alpha.E_0$ | 0 | $2\alpha^2.E_0$ | $2\alpha^2.E_0$ | 0 | $\dfrac{\pi}{2}$ | |

Le signal issu de la deuxième sortie 154d du deuxième coupleur 104 est dirigé vers l'entrée du dispositif non linéaire absorbant 110. Vu la valeur assignée à la valeur de seuil, l'amplitude du signal en sortie 156b du composant 110 vaut 0 où $2\alpha^2.E_0$. En effet la valeur de seuil étant fixée légèrement supérieure à $\alpha^2.E_0$, seuls les signaux dont l'amplitude vaut $2\alpha^2.E_0$ sont transmis.

Un tableau similaire au tableau (3) peut être écrit pour le troisième coupleur 106, dont le signal sur la première entrée 156a est le même que celui de la première sortie 154c du deuxième coupleur 104 et dont le signal sur la seconde entrée 156b est le même que celui de la sortie du dispositif non linéaire absorbant 110. Le signal sur la première sortie 156c est représenté par $S_1$ dans la relation (1).

| $|E1|$ | $|E2|$ | $|S_1|$ | $\varphi_{s1}$ | |
|---|---|---|---|---|
| 0 | 0 | 0 | X | |
| $\alpha^2.E_0$ | 0 | $\alpha^3.E_0$ | 0 | (4) |
| $\alpha^2.E_0$ | 0 | $\alpha^3.E_0$ | 0 | |
| $2\alpha^2.E_0$ | $2\alpha^2.E_0$ | 0 | X | |

La première sortie 156c du troisième coupleur 106 délivre alors un signal représentatif du résultat de la fonction OU-exclusif. On a alors réalisé une fonction OU-exclusif entre les signaux présents sur les entrées 152a et 152b grâce aux trois coupleurs 102, 104 et 106 et au dispositif non linéaire absorbant 110. De plus la phase en sortie est constante si bien qu'il n'est pas nécessaire de la contrôler.

Afin de réaliser la boucle de rétroaction 30 et d'alimenter le dispositif adapté à moduler 200, le signal présent à la première sortie 156c du troisième coupleur 106 doit être envoyé à la fois sur la première entrée 162a du dispositif adapté à moduler 200 et sur la boucle de rétroaction 30. Pour cela le quatrième coupleur 108 est utilisé à la suite du troisième coupleur 106. L'avantage est qu'un tel moyen est un moyen simple de séparer le signal. La fonction du quatrième coupleur 108 est de séparer le signal afin d'alimenter le dispositif adapté à moduler 200 et la boucle de rétroaction 30.

Le signal présent sur la première sortie 156c du troisième coupleur 106 est envoyé sur la première entrée 158a du quatrième coupleur 108. Un tableau similaire au tableau (4) peut être écrit pour le quatrième coupleur 108. Les signaux $S_1$ et $S_2$ représentent alors les signaux présents sur les sorties 158c et 158d.

| [E1] | \|E2\| | $[S_1]$ | $\|S_2\|$ | $\varphi_{s1}$ | $\varphi_{s2}$ |
|---|---|---|---|---|---|
| 0 | 0 | 0 | 0 | X | X |
| $\alpha^3.E_0$ | 0 | $\alpha^4.E_0$ | $\alpha^4.E_0$ | 0 (5) | $\dfrac{\pi}{2}$ |
| $\alpha^3.E_0\ \alpha^3.E_0$ | 0 | $\alpha^4.E_0\ \alpha^4.E_0$ | $\alpha^4.E_0\ \alpha^4.E_0$ | 0 | $\dfrac{\pi}{2}$ |
| 0 | 0 | 0 | 0 | X | X |

Le champ sur la première sortie 158c alimente le dispositif adapté à moduler 200 et s'écrit lorsqu'il n'est pas nul: $E = \alpha^4.E_0$ (6).

Le champ sur la deuxième sortie 158d alimente la boucle de rétroaction 30 et s'écrit lorsqu'il n'est pas nul:

$$E = \alpha^4.E_0.e^{i\frac{\pi}{2}} \quad (7).$$

Le champ sur la sortie 158d est alors utilisé pour générer le champ présent sur la deuxième entrée 152b du module d'encodage différentiel 100.

Sur le premier coupleur 102, nous avons supposé que le champ présent sur la seconde entrée 152b avait une amplitude $E_0$ et un déphasage de $-\dfrac{\pi}{2}$ par rapport au champ présent sur la première entrée 152a.

Pour obtenir ce résultat à partir du champ présent sur la deuxième sortie 158d du quatrième coupleur 108, un dispositif de déphasage optique 112 est mis en place. Le dispositif de déphasage 112 induit un déphasage de $\pi$, ce qui a pour effet de ramener la phase à $-\dfrac{\pi}{2} \cdot$ Théoriquement le déphasage du signal issu de la deuxième sortie 158d du quatrième coupleur 108 est de $\dfrac{\pi}{2}$, mais les différents composants peuvent introduire des déphasages parasites, il est donc avantageux de prévoir un dispositif de déphasage 112 accordable pour permettre de ramener effectivement la phase à $-\dfrac{\pi}{2} \cdot$

Un amplificateur optique 114 de gain 12.04dB ramène l'amplitude du champ en sortie de l'amplificateur 114 à $E_0$ ou à zéro.

On a alors un champ d'amplitude $E_0$ et déphasé de $-\dfrac{\pi}{2}$ par rapport au champ présent sur la première entrée 152a.

Un dispositif de retard optique accordable 116 est mis en place pour synchroniser les bits des signaux des deux entrées 152a et 152b entre eux. En particulier on règle le dispositif de retard optique 116 pour avoir un nombre entier de temps bit de retard.

Le module d'encodage différentiel 100 réalise bien un encodage différentiel entre les deux signaux d'entrées 152a et 152b, la deuxième sortie 158d bouclant sur la deuxième entrée 152b pour réaliser une boucle de rétroaction.

Le dispositif adapté à moduler 200 est alimenté par sa deuxième entrée 162e le signal optique 16, dont le champ électromagnétique a une amplitude de $\dfrac{\alpha^4}{2}.E_0$ et une phase constante de $\pi$.

Le dispositif de déphasage 204 est mis en place afin d'assurer un déphasage de $\dfrac{\pi}{2}$ par rapport à la phase du signal de la première entrée 162a. Comme pour le dispositif de déphasage 112, ce nouveau dispositif de déphasage peut être accordable pour garantir le déphasage de $\dfrac{\pi}{2}$ entre les deux signaux.

Ce qui importe c'est que le signal présent sur la deuxième entrée 162b du cinquième coupleur 202 soit déphasé de $\dfrac{\pi}{2}$ par rapport au signal encodé présent à la première entrée 162a du dispositif adapté à moduler 200.

Un tableau similaire au tableau (5) peut être écrit. Les signaux $E_1$ et $E_2$ correspondants aux signaux des entrées 162a et 162b, le signal $S_1$ correspondant au signal de la sortie 162c.

| |E1] | [E2| | |S_1| | $\varphi_{s1}$ | |
|---|---|---|---|---|
| 0 | $\dfrac{\alpha^4}{2}.E_0$ | $\dfrac{\alpha^5}{2}.E_0$ | $\pi$ | (6) |
| $\alpha^4.E_0$ | $\dfrac{\alpha^4}{2}.E_0$ | $\dfrac{\alpha^5}{2}.E_0$ | 0 | |

Le champ en sortie a donc une amplitude constante, le signal n'est donc pas modulé en intensité.

Par contre sa phase varie et présente un déphasage de $\pi$ selon le résultat de la fonction logique OU-exclusif entre les entrées 152a et 152b du module d'encodage différentiel 100. L'information est codée dans la différence de phase, le signal délivré par la première sortie 162c est donc un signal 14 modulé au format DPSK.

Le dispositif de retard optique accordable 206 permet la synchronisation des bits des signaux des deux entrées 162a et 162b du cinquième coupleur 202. En particulier on règle le dispositif de retard optique 206 pour avoir un nombre entier de temps bit de retard.

Le dispositif de retard optique 206 n'est pas nécessaire lorsque le signal émis à la sortie 162c est dans un format NRZ-DPSK (Non-Return-to-Zero-DPSK) car la porteuse 16 est alors une onde continue.

Le dispositif de retard optique 206 est nécessaire lorsque le signal émis à la sortie 162c est dans un format RZ-DPSK (Return-to-Zero-DPSK) car la porteuse 16 est alors une onde modulée et la synchronisation entre les signaux est nécessaire.

Bien entendu, la présente invention n'est pas limitée aux exemples et modes de réalisation décrits et représentés, mais elle est susceptible de nombreuses variantes accessibles à l'homme de l'art.

Par exemple, les valeurs numériques des composants sont données à titre d'exemple dans le cas de composants parfaits qui ne génèrent aucune perte, ces valeurs doivent être adaptées pour permettre d'ajuster les valeurs réelles des amplitudes des signaux aux valeurs théoriques.

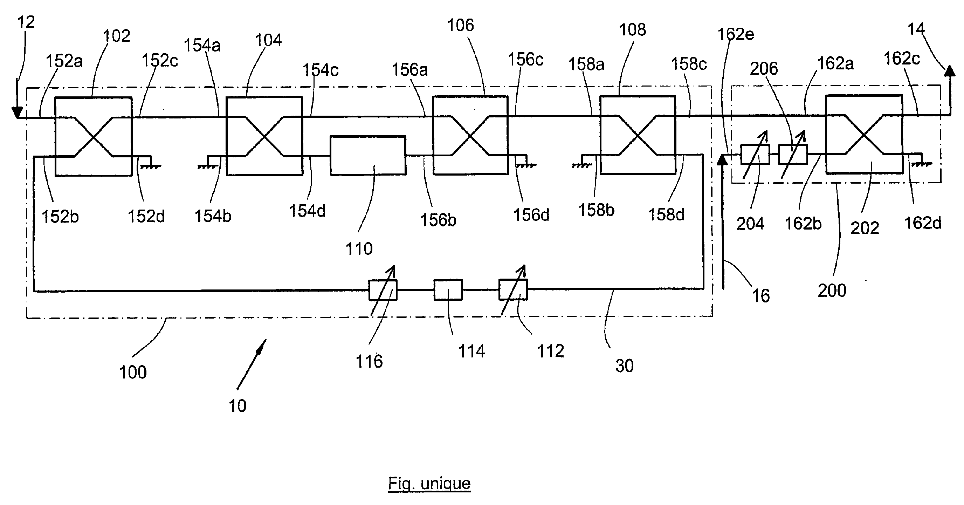

**Revendications**

**1.** Convertisseur (10) tout optique d'un signal optique modulé en intensité en un signal optique modulé au format DPSK, comprenant:

- une première entrée (152a) pour un premier signal optique modulé en intensité (12);
- un module d'encodage différentiel (100) adapté à réaliser un encodage différentiel entre le premier signal (12) et un deuxième signal optique synchrone avec le premier signal (12);
- un dispositif de modulation (200) adapté à moduler la phase d'un signal optique (16) en fonction de l'encodage différentiel réalisé par le module d'encodage différentiel (100) ;
- une sortie (162c) du dispositif adapté à moduler (200) délivrant un signal optique modulé au format DPSK (14).

**2.** Convertisseur (10) selon la revendication 1, dont le module d'encodage différentiel (100) est adapté à réaliser l'encodage différentiel à partir d'une fonction OU-exclusif et d'une boucle de rétroaction (30).

**3.** Convertisseur (10) selon la revendication 2, dont, pour réaliser la fonction OU-exclusif, le module d'encodage différentiel (100) comprend:

- un premier coupleur optique (102) dont la première entrée (152a) est alimentée avec le premier signal (12), dont la deuxième entrée (152b) est alimentée avec le deuxième signal et dont la deuxième sortie (152d) n'est pas connectée;
- un deuxième coupleur optique (104) dont la première entrée (154a) est alimentée par la première sortie (152c) du premier coupleur (102), dont la deuxième entrée (154b) n'est pas alimentée;
- un dispositif non linéaire absorbant (110) dont l'entrée est alimentée par la deuxième sortie (154d) du deuxième coupleur (104); et
- un troisième coupleur optique (106) dont la première entrée est alimentée par la première sortie (154c) du deuxième coupleur (104), dont la deuxième entrée (156b) est alimentée par la sortie du dispositif non linéaire absorbant (110), dont la deuxième sortie (156d) n'est pas connectée et dont la première sortie (156c) délivre le signal représentatif du résultat de la fonction OU-exclusif.

**4.** Convertisseur (10) selon la revendication 3, dont le module d'encodage différentiel (100) comprend un quatrième coupleur optique (108) dont la première entrée (158a) est alimentée par la première sortie (156c) du troisième coupleur (106), dont la deuxième entrée (158b) n'est pas alimentée, dont la première sortie (158c) alimente le dispositif adapté à moduler (200) et dont la deuxième sortie (158d) alimente la boucle de rétroaction (30).

**5.** Convertisseur (10) selon l'une des revendications 2 à 4, dont la boucle de rétroaction (30) est adaptée à délivrer le deuxième signal optique synchrone.

**6.** Convertisseur (10) selon la revendication 5, dont la boucle de rétroaction (30) comprend un dispositif de déphasage optique (112) et un amplificateur optique (114).

**7.** Convertisseur (10) selon la revendication 6, dont la boucle de rétroaction (30) comprend aussi un dispositif de retard optique accordable (116) adapté à retarder le deuxième signal par rapport au premier signal (12) avec un nombre entier de temps bits.

**8.** Convertisseur (10) selon l'une des revendications 1 à 7, dont le dispositif adapté à moduler (200) comprend un coupleur (202) dont la première entrée (162a) est alimentée par le signal encodé par le module d'encodage différentiel (100), dont la deuxième entrée (162b) est alimentée par un signal déphasé de $\dfrac{\pi}{2}$ par rapport au signal encodé, dont la deuxième sortie (162d) n'est pas connectée et dont la première sortie (162c) est adapté à délivrer un signal optique modulé au format DPSK (14).

**9.** Convertisseur (10) selon la revendication 8, dont le dispositif adapté à moduler (200) comprend en amont de sa deuxième entrée (162b) un dispositif de retard optique accordable (206) adapté à retarder le signal déphasé par rapport au signal encodé avec un nombre entier de temps bits.

**10.** Convertisseur (10) selon l'une des revendications 8 à 9, dont la fonction OU-exclusif est adapté à faire varier la phase du signal optique modulé au format DPSK (14) entre zéro et π.

**11.** Convertisseur (10) selon l'une des revendications précédentes, dont les coupleurs optiques (102, 104, 106, 108, 202) sont des coupleurs optiques 3dB.

**12.** Convertisseur (10) selon la revendication 11, adapté à recevoir le premier signal (12) ayant une amplitude de $E_0$ et le deuxième signal ayant une amplitude de $E_0$ et un déphasage de $-\dfrac{\pi}{2}$ par rapport au premier signal (12); dont l'amplificateur optique (114) a un gain de 12.04dB; dont le dispositif non linéaire absorbant (110) a un seuil légèrement

supérieur à $\alpha^2.E_0$ avec $\alpha = \dfrac{\sqrt{2}}{2}$ ; adapté à recevoir en deuxième entrée (162b) du coupleur (202) du dispositif adapté à moduler (200) un signal ayant une amplitude de $\dfrac{\alpha^4}{2}.E_0$ et un déphasage de $\dfrac{\pi}{2}$ par rapport au signal alimentant la première entrée (162a) coupleur (202) du dispositif adapté à moduler (200).

**Claims**

1. All-optical converter (10) for converting an intensity-modulated optical signal into a DPSK-format modulated optical signal, comprising:

   - a first input (152a) for a first intensity-modulated optical signal (12);
   - a differential encoding module (100) designed to perform a differential encoding between the first signal (12) and a second optical signal synchronous with the first signal (12);
   - a modulation device (200) designed to modulate the phase of an optical signal (16) according to the differential encoding performed by the differential encoding module (100);
   - an output (162c) of the modulation device (200) delivering a DPSK-format modulated optical signal (14) .

2. Converter (10) according to Claim 1, of which the differential encoding module (100) is designed to perform the differential encoding based on an exclusive-OR function and a feedback loop (30).

3. Converter (10) according to Claim 2, of which, to perform the exclusive-OR function, the differential encoding module (100) comprises:

   - a first optical coupler (102), of which the first input (152a) is fed with the first signal (12), of which the second input (152b) is fed with the second signal and of which the second output (152d) is not connected;
   - a second optical coupler (104), of which the first input (154a) is fed by the first output (152c) of the first coupler (102), of which the second input (154b) is not fed;
   - a non-linear absorbent device (110), of which the input is fed by the second output (154d) of the second coupler (104); and
   - a third optical coupler (106), of which the first input is fed by the first output (154c) of the second coupler (104), of which the second input (156b) is fed by the output of the non-linear absorbent device (110), of which the second output (156d) is not connected and of which the first output (156c) delivers the signal representative of the result of the exclusive-OR function.

4. Converter (10) according to Claim 3, of which the differential encoding module (100) comprises a fourth optical coupler (108), of which the first input (158a) is fed by the first output (156c) of the third coupler (106), of which the second input (158b) is not fed, of which the first output (158c) feeds the modulation device (200) and of which the second output (158d) feeds the feedback loop (30).

5. Converter (10) according to one of Claims 2 to 4, of which the feedback loop (30) is designed to deliver the second synchronous optical signal.

6. Converter (10) according to Claim 5, of which the feedback loop (30) comprises an optical phase-shift device (112), and an optical amplifier (114).

7. Converter (10) according to Claim 6, of which the feedback loop (30) also comprises a tunable optical delay device (116) designed to delay the second signal relative to the first signal (12) with an integer number of bit times.

8. Converter (10) according to one of Claims 1 to 7, of which the modulation device (200) comprises a coupler (202), of which the first input (162a) is fed by the signal encoded by the differential encoding module (100), of which the second input (162b) is fed by a signal phase-shifted by $\dfrac{\pi}{2}$ relative to the encoded signal, of which the second output (162d) is not connected and of which the first output (162c) is designed to deliver a DPSK-format modulated optical signal (14).

9. Converter (10) according to Claim 8, of which the modulation device (200) comprises upstream of its second input (162b) a tunable optical delay device (206) designed to delay the signal phase-shifted relative to the encoded signal with an integer number of bit times.

10. Converter (10) according to one of Claims 8 to 9, of which the exclusive-OR function is designed to vary the phase of the DPSK-format modulated optical signal (14) between zero and $\pi$.

11. Converter (10) according to one of the preceding claims, of which the optical couplers (102, 104, 106, 108, 202) are 3 dB optical couplers.

12. Converter (10) according to Claim 11, designed to receive the first signal (12) having an amplitude of $E_0$ and the second signal having an amplitude of $E_0$ and a phase shift of $-\dfrac{\pi}{2}$ relative to the first signal (12); of which the optical amplifier (114) has a gain of 12.04 dB; of which the non-linear absorbent device (110) has a threshold slightly greater than $\alpha^2.E_0$ with $\alpha = \dfrac{\sqrt{2}}{2}$; designed to receive at the second input (162b) of the coupler (202) of the modulation device (200) a signal having an amplitude of $\dfrac{\alpha^4}{2}.E_0$ and a phase shift of $\dfrac{\pi}{2}$ relative to the signal feeding the first input (162a) of the coupler (202) of the modulation device (200).

**Patentansprüche**

1. Rein optischer Wandler (10) eines intensitätsmodulierten optischen Signals in ein im Format DPSK moduliertes optisches Signal, der aufweist:

   - einen ersten Eingang (152a) für ein erstes intensitätsmoduliertes optisches Signal (12);
   - einen Modul zur differentiellen Codierung (100), der angepasst ist, um eine differentielle Codierung zwischen dem ersten (12) und einem zweiten optischen Signal durchzuführen, das mit dem ersten Signal (12) synchron ist;
   - eine Modulationsvorrichtung (200), die angepasst ist, um die Phase eines optischen Signals (16) in Abhängigkeit von der vom Modul zur differentiellen Codierung (100) durchgeführten differentiellen Codierung zu modulieren;
   - einen Ausgang (162c) der modulierfähigen Vorrichtung (200), der ein auf das Format DPSK moduliertes optisches Signal (14) liefert.

2. Wandler (10) nach Anspruch 1, dessen Modul zur differentiellen Codierung (100) angepasst ist, um die differentielle Codierung ausgehend von einer ODER-Exklusiv-Funktion und einer Rückkopplungsschleife (30) durchzuführen.

3. Wandler (10) nach Anspruch 2, dessen Modul zur differentiellen Codierung (100) zur Durchführung der ODER-Exklusiv-Funktion aufweist:

   - einen ersten optischen Koppler (102), dessen erster Eingang (152a) mit dem ersten Signal (12) gespeist wird, dessen zweiter Eingang (152b) mit dem zweiten Signal gespeist wird, und dessen zweiter Ausgang (152d) nicht verbunden ist;
   - einen zweiten optischen Koppler (104), dessen erster Eingang (154a) vom ersten Ausgang (152c) des ersten Kopplers (102) gespeist wird, dessen zweiter Eingang (154b) nicht gespeist wird;
   - eine nicht lineare, absorbierende Vorrichtung (110), deren Eingang vom zweiten Ausgang (154d) des zweiten Kopplers (104) gespeist wird; und
   - einen dritten optischen Koppler (106), dessen erster Eingang vom ersten Ausgang (154c) des zweiten Kopplers (104) gespeist wird, dessen zweiter Eingang (156b) vom Ausgang der nicht linearen absorbierenden Vorrichtung (110) gespeist wird, dessen zweiter Ausgang (156d) nicht verbunden ist und dessen erster Ausgang (156c) das für das Ergebnis der ODER-Exklusiv-Funktion repräsentative Signal liefert.

4. Wandler (10) nach Anspruch 3, dessen Modul zur differentiellen Codierung (100) einen vierten optischen Koppler (108) aufweist, dessen erster Eingang (158a) vom ersten Ausgang (156c) des dritten Kopplers (106) gespeist wird, dessen zweiter Eingang (158b) nicht gespeist wird, dessen erster Ausgang (158c) die modulierfähige Vorrichtung (200) speist, und dessen zweiter Ausgang (158d) die Rückkopplungsschleife (30) speist.

5. Wandler (10) nach einem der Ansprüche 2 bis 4, dessen Rückkopplungsschleife (30) angepasst ist, um das zweite synchrone optische Signal zu liefern.

6. Wandler (10) nach Anspruch 5, dessen Rückkopplungsschleife (30) eine optische Phasenverschiebungsvorrichtung (112) und einen optischen Verstärker (114) aufweist.

7. Wandler (10) nach Anspruch 6, dessen Rückkopplungsschleife (30) auch eine abstimmbare optische Verzögerungsvorrichtung (116) aufweist, die angepasst ist, um das zweite Signal bezüglich des ersten Signals (12) mit einer ganzen Zahl von Bitzeiten zu verzögern.

8. Wandler (10) nach einem der Ansprüche 1 bis 7, dessen modulierfähige Vorrichtung (200) einen Koppler (202) aufweist, dessen erster Eingang (162a) mit dem vom Modul zur differentiellen Codierung (100) codierten Signal gespeist wird, dessen zweiter Eingang (162b) mit einem um $\dfrac{\pi}{2}$ bezüglich des codierten Signals phasenverschobenen Signal gespeist wird, dessen zweiter Ausgang (162d) nicht verbunden ist und dessen erster Ausgang (162c) angepasst ist, um ein im Format DPSK moduliertes optisches Signal (14) zu liefern.

9. Wandler (10) nach Anspruch 8, dessen modulierfähige Vorrichtung (200) vor ihrem zweiten Eingang (162b) eine abstimmbare optische Verzögerungsvorrichtung (206) aufweist, die angepasst ist, um das phasenverschobene Signal bezüglich des codierten Signals mit einer ganzen Zahl von Bitzeiten zu verzögern.

10. Wandler (10) nach einem der Ansprüche 8 bis 9, dessen ODER-Exklusiv-Funktion angepasst ist, um die Phase des auf das DPSK-Format modulierten optischen Signals (14) zwischen Null und $\pi$ variieren zu lassen.

11. Wandler (10) nach einem der vorhergehenden Ansprüche, dessen optische Koppler (102, 104, 106, 108, 202) optische 3dB-Koppler sind.

12. Wandler (10) nach Anspruch 11, der angepasst ist, um das erste Signal (12), das eine Amplitude von $E_0$ hat, und das zweite Signal, das eine Amplitude von $E_0$ und eine Phasenverzögerung von $-\dfrac{\pi}{2}$ bezüglich des ersten Signals (12) hat, zu empfangen; dessen optischer Verstärker (114) eine Verstärkung von 12,04dB hat; dessen nicht lineare absorbierende Vorrichtung (110) einen Schwellwert geringfügig über $\alpha^2 . E_0$ hat, mit $\alpha = \dfrac{\sqrt{2}}{2}$; angepasst, um am zweiten Eingang (162b) des Kopplers (202) der modulierfähigen Vorrichtung (200) ein Signal zu empfangen, das eine Amplitude von $\dfrac{\alpha^4}{2} \cdot E_0$ und eine Phasenverzögerung von $\dfrac{\pi}{2}$ bezüglich des Signals hat, das den ersten Eingang (162a) des Kopplers (202) der modulierfähigen Vorrichtung (200) speist.

Fig. unique

EP 1 695 465 B1